Europäisches Patentamt

European Patent Office

Office européen des brevets

(19)

(11) EP 0 416 172 B1

(12) EUROPEAN PATENT SPECIFICATION

(45) Date of publication and mention
of the grant of the patent:
**24.07.1996 Bulletin 1996/30**

(51) Int Cl.6: **G09G 3/36**

(21) Application number: **89123575.6**

(22) Date of filing: **20.12.1989**

(54) **Information processing system with display panel**

Datenverarbeitungssystem mit Anzeigetafel

Système de traitement d'informations avec panneau d'affichage

(84) Designated Contracting States:
**AT BE CH DE ES FR GB GR IT LI LU NL SE**

(30) Priority: **08.09.1989 JP 233771/89**
**11.09.1989 JP 236310/89**

(43) Date of publication of application:
**13.03.1991 Bulletin 1991/11**

(73) Proprietor: **CANON KABUSHIKI KAISHA**
**Tokyo (JP)**

(72) Inventors:
• **Kato, Takashi**
**Asaka-shi Saitama-ken (JP)**
• **Inoue, Hiroshi Nyu-Raifu F409**
**Yokohama-shi Kanagawa-ken (JP)**
• **Enomoto, Aiko**
**Zama-shi Kanagawa-ken (JP)**

(74) Representative: **Tiedtke, Harro, Dipl.-Ing. et al**
**Patentanwaltsbüro**
**Tiedtke-Bühling-Kinne & Partner**
**Bavariaring 4**
**80336 München (DE)**

(56) References cited:
**EP-A- 0 308 987**          **EP-A- 0 318 050**
**EP-A- 0 361 471**          **FR-A- 2 569 294**
**US-A- 4 691 200**

• **JOURNAL OF PHYSICS E/SCIENTIFIC**
**INSTRUMENTS vol. 21, no. 5, 1 May 1988,**
**BRISTOL, GREAT BRITAIN pages 460 - 466; J.**
**WAHL ET AL.: 'EXPERIMENTAL DRIVER AND**
**ADDRESSING TECHNIQUES FOR**
**FERROELECTRIC LIQUID CRYSTAL DEVICES'**

**Description**

BACKGROUND OF THE INVENTION

Field of the Invention

The present invention relates to an information processing system and, more particularly, to an image information processing system suitable for a display device using a ferro-electric liquid crystal.

Related Background Art

A typical conventional computer terminal display device is a refresh scan type CRT. A vector scan type CRT having a partial memory function is often used for a CAD large, high-precision display. In a vector scan type CRT, once information is displayed on its screen, the screen is not updated until the screen content is erased. Therefore, the vector scan type CRT is not suitable as a real-time man-machine interface display device for performing a cursor shift display, a shift display of an icon such as a mouse as a display of information from a pointing device, an edit display (e.g., insertion, deletion, shift, and copy) of characters and sentences. On the other hand, the refresh scan type CRT requires a refresh cycle of 60 Hz or more as a frame frequency in order to prevent flickering. In order to improve icon readability and a shift display (mouse or cursor) of intrascreen information, a non-interlaced scan scheme is employed (a television receiver has a field frequency of 60 Hz or a frame frequency of 30 Hz in order to achieve a dynamic image display and simplify a drive control system). For this reason, when a display resolution is increased, the display device becomes large in size. In addition, a high power is required, and a drive controller becomes bulky, resulting in high cost.

In recent years, a flat display panel has been introduced to cope with inconvenience of a large, high-power CRT. Several existing drive schemes are available for the flat display panels. For example, a time-divisional drive system (STN) for a twisted nematic liquid crystal, a monochromatic display system (NTN) as its modification, or a plasma display system employs the same image data transfer scheme as the CRT. In addition, a screen update scheme also employs a non-interlaced scan scheme having a frame frequency of 60 Hz or more. Therefore, the total number of scan lines constituting one frame ranges from 400 to 480, which cannot exceed 1,000 due to the following reason. Since such a display panel does not have a memory function due to the principle of driving, it requires a refresh cycle having a frame frequency of 60 Hz or more to prevent flickering. One horizontal scan interval becomes as short as 10 to 50 μsec or less. As a result, a high contrast level cannot be obtained.

A ferro-electric liquid crystal display device has a larger screen than that of the above display devices and can perform high-precision display. However, in order to cope with the man-machine interface display device at a low frame frequency, a partial update scan scheme (i.e., only scan lines within an update area are scanned) is required. The partial update scan scheme is described in U.S.P. No. 4,655,561 to Kanbe et al.

The partial update scan scheme is particularly suitable for the ferro-electric liquid crystal display device to perform a shift display of a mouse or cursor and a scroll display of a multi-window. However, partial update scan of different areas cannot be simultaneously performed. When partial update scan is performed by designating a partial update scan start address and its end address, the shift display of a mouse or cursor cannot be performed during scrolling of the multi-window. A window scroll display and a point device display are considered as examples, and their display movements are assumed. Even if the point device is moved after the scroll partial update scan is started on the display panel, update scan of the pointing device cannot be started until the end of scan of the final scan line address of the window. For this reason, the pointing device is discontinuously moved in accordance with the size of the window (i.e., the number of partial update scan lines), resulting in an unnatural shift display.

Document EP-A-0 318 050 discloses a data processing system comprising a driving means having a memory for storing an image information, a scanning line driving circuit for applying a first scanning selection signal wave form to a first scanning line among plural scanning lines on a display panel, and for applying a second scanning selection signal wave form to a second scanning line different from said first scanning line, and an information line driving circuit for applying an information signal to plural information lines on said display panel. A control means controls the driving means to perform a partial rewriting routine for partial rewrite displaying by selecting a predetermined number of scanning lines among all of the scanning lines on said display panel. The partial rewriting is performed by means of interlaced or multi-interlaced scanning.

Furthermore, document FR-A-2 596 294 discloses simultaneous addressing of two adjacent scan lines.

However, since the conventional systems only perform conventional interlaced or multi-interlaced scanning a corresponding frame frequency is unpreferably low, thus causing display flickering.

EP 0 416 172 B1

## Summary of the invention:

It is, therefore, an object of the present invention to provide an information processing system which can perform partial rewriting with reduced display flickering.

According to the present invention this object is achieved by an information processing system comprising: a driving means having a memory for storing image information, a scanning line driving circuit for applying a first scanning selection signal wave form to a first scanning line among plural scanning lines on a display panel, and for simultaneously applying a second scanning selection signal wave form to a second scanning line different from said first scanning line, and an information line driving circuit for applying an information signal to plural information lines on said display panel; and a control means for controlling said driving means to perform a partial rewriting routine for partial rewrite displaying by selecting a predetermined number of scanning lines among all of the scanning lines on said display panel; wherein a first address of the scanning line currently subjected to the scanning selection at a routine before the partial rewrite routine is compared with a second address of the scanning line to be subjected to the scanning selection at the beginning of the partial rewriting, and when the compared addresses are identical, said second address of the scanning line to be subjected to the scanning address at the beginning of the partial rewriting is subjected to a decrement or increment.

## Brief description of the drawings:

The advantages of the invention will become apparent and obvious to those skilled in the pertinent art upon referring to the following description provided in connection with the accompanying drawings, of which:

Figs. 1A and 1B are block diagrams showing a ferro-electric liquid crystal display device and a graphic controller;
Figs. 2A to 2G are timing charts of image information communication between the ferro-electric liquid crystal display device and the graphic controller;
Fig. 3 is a view showing a display screen to illustrate a plurality of graphic events;
Fig. 4 is a block diagram of a display control program;
Figs. 5A and 5B are block diagrams of the graphic controller used in the present invention;
Fig. 6 is a block diagram of a digital interface;
Fig. 7 is a timing chart of an interface for a display drive unit;
Figs. 8A to 8I are timing charts of an interface for an FLCD controller;
Figs. 9A and 9B show a partial update algorithm of a two-line simultaneous access waveform according to the present invention;

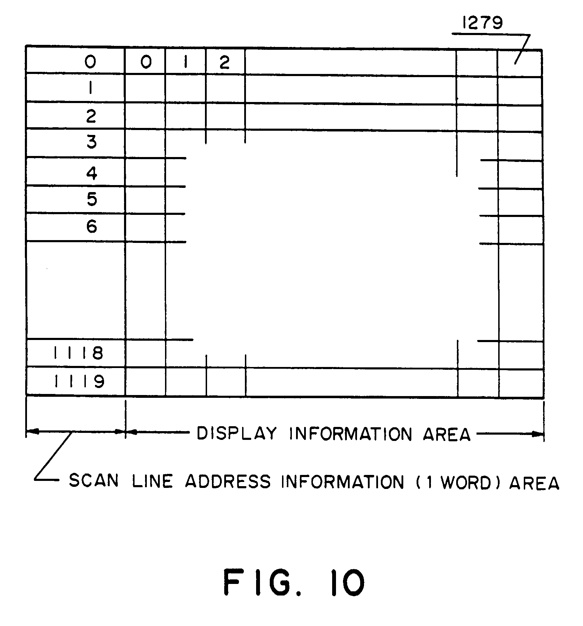

Fig. 10 is a view for explaining data mapping between scan line address information and display information in the VRAM:
Fig. 11 is a view showing a multi-window display screen;
Fig. 12A is a drive waveform chart used in the present invention;
Fig. 12B is a view showing a display state of pixels at that time;
Fig. 13 is a timing chart thereof;
Figs. 14A and 14B are drive waveform charts used in the present invention;
Figs. 15A to 15C are timing charts thereof;
Fig. 15D is a view showing a display state of pixels at that time; and
Figs. 16 and 17 are respectively perspective views of ferro-electric liquid crystal cells used in the present invention.

## DETAILED DESCRIPTION OF THE PREFERRED EMBODIMENT:

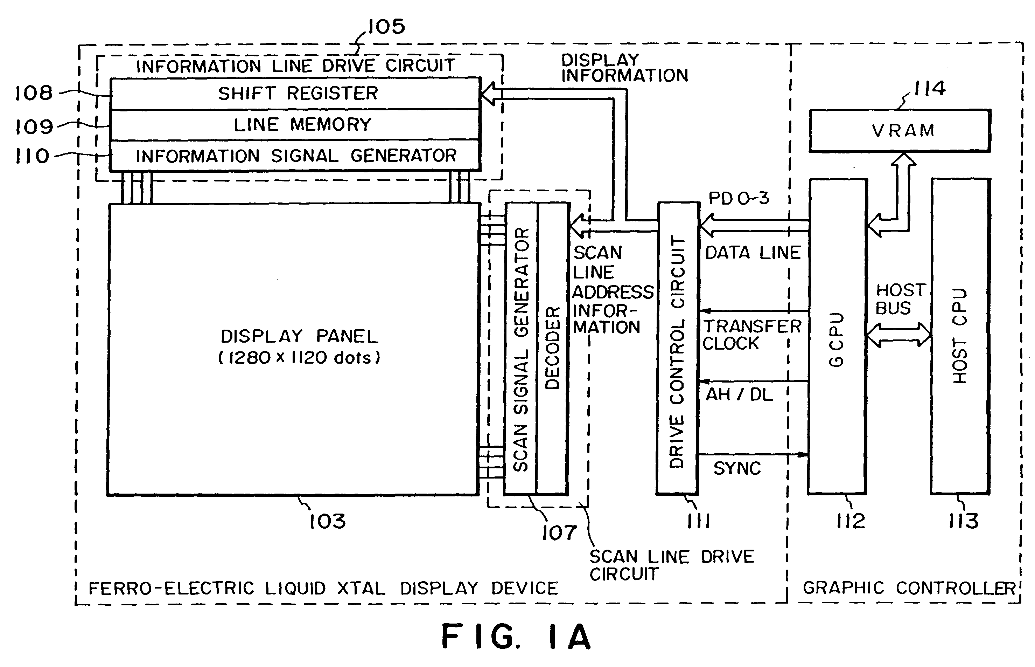

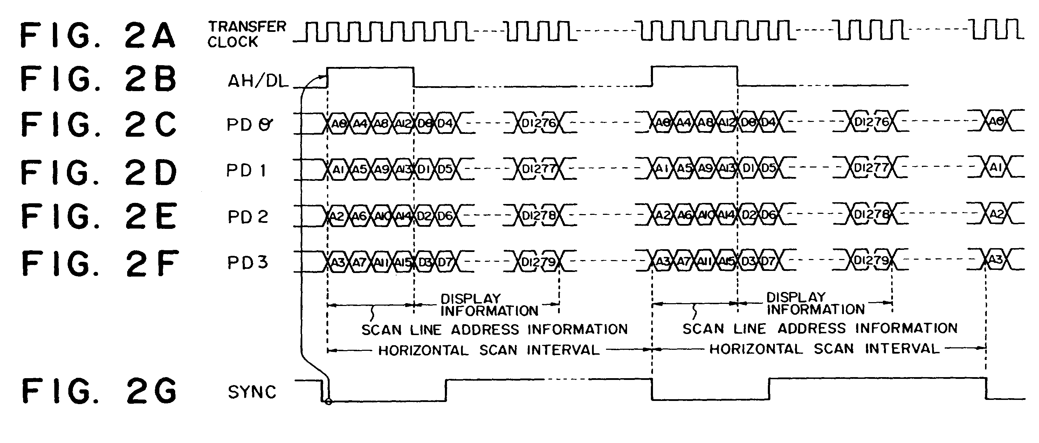

Fig. 1A is a block diagram of a ferro-electric liquid crystal display device 101 and a graphic controller 102 arranged in a main unit such as a personal computer serving as a source of display information. Figs. 2A to 2G are communication timing charts of image information. A display panel 103 is arranged such that 1,120 scan electrodes and 1,280 information electrodes are arranged in a matrix, and a ferro-electric liquid crystal is sealed between two aligned glass plates. The scan lines are connected to a scan line drive circuit 104, and the information lines are connected to an information line drive circuit 105.

An operation of the above apparatus will be described with reference to the accompanying drawings. The graphic controller 102 transfers to a display drive circuit (consisting of the line drive circuits 104 and 105) 104/105 of the liquid crystal display device 101 image information (PD0 to PD3) on the scan line designated by scan line address information for designating the scan electrode and its address information. In order to transfer image information having the scan line address information and the display information on one transmission line, two types of information must be distinguished from each other. For this purpose, an identification signal AH/DL is used. When the signal AH/DL is set at high

EP 0 416 172 B1

level, it represents the scan line address information. However, when the signal AH/DL is set at low level, it represents display information.

The scan line address information is extracted by a drive control circuit 111 in the liquid crystal display device 101 from image information sent as image information PD0 to image information PD3, and the extracted signals are output to the scan line drive circuit 104 at a timing for driving the designated scan line. The scan line address information is input to a decoder 106 in the scan line drive circuit 104, and the scan electrode designated by the display panel 103 is driven by a scan signal generator 107 through the decoder 106. The display information is supplied to a shift register 108 in the information line drive circuit 105 and is shifted in response to a transfer clock in units of four pixels. When one scan line shift in the horizontal direction is completed by the shift register 108, 1,280-pixel display information is transferred to a line memory 109 arranged in parallel with the shift register 108 and is stored within one horizontal scan interval. The stored information is output from an information signal generator 110 to each information electrode as a display information signal.

Driving of the display panel 103 by the liquid crystal display device 101 is asynchronous with generation of scan line address information and display information by the graphic controller 102. Therefore, the display device 101 must be synchronized with the controller 102 during image information in response to a signal SYNC. The signal SYNC is generated by the drive control circuit 111 in the liquid crystal display device 101 every horizontal scan interval. The graphic controller 102 always monitors the signal SYNC. When the signal SYNC is set at low level, image information transfer is performed. However, when the signal SYNC is set at high level, no transfer is performed at the end of transfer of the image information of one horizontal scan line. That is, when the graphic controller 102 detects that the signal SYNC goes low in Fig. 2, the signal AH/DL is set at high level to start transfer of the image information of one horizontal scan line. The drive control circuit 111 in the liquid crystal display device 101 sets the signal SYNC at high level during transfer of the image information. After write access of the display panel 103 through one predetermined horizontal scan interval, the drive control circuit (FLCD controller) 111 sets the signal SYNC to low level again and can receive image information of the next scan line.

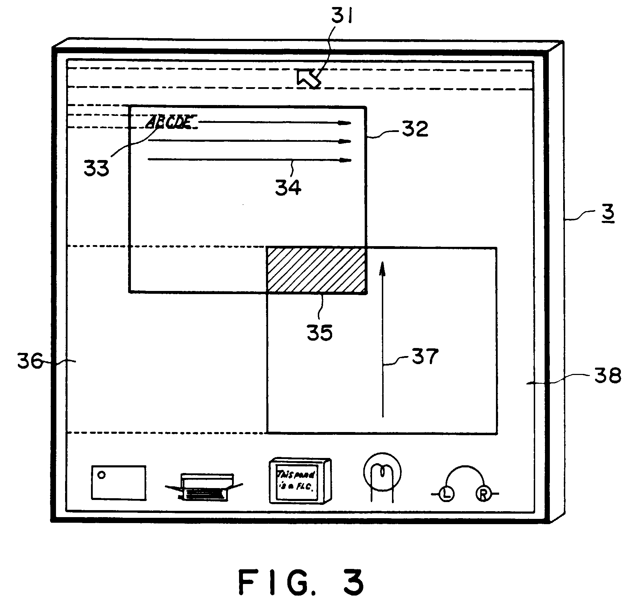

Fig. 3 shows a display screen 3 obtained when a display request for a plurality of pieces of display information is made in a multi-window, multi-task system.

Display request 31:     a request for smoothly moving a mouse font obliquely

Display request 32:     a request for selecting a given window as an active screen and displaying a portion overlapping the previous window as a front layer

Display request 33:     a request for inserting a character input from a keyboard

Display request 34:     a request for moving a previous character (character shift to a direction of an arrow)

Display request 35:     a request for changing a display of an overlap area

Display request 36:     a request for displaying a non-active window

Display request 37     a request for scrolling and displaying the non-active window

Display request 38:     a request for displaying a full image field

The following table 1 represents a display priority order of graphic events corresponding to the aforementioned display requests 31 to 38.

Table 1

| Graphic Event | Drive Mode | Display Priority Order | Drawing Operation |
|---|---|---|---|
| 31 mouse shift display | partial update | highest level | |
| 32 active window area ON | | | logical access area |
| 33 character insertion display | partial update | second level | |
| 34 character shift display | partial update | third level | |
| 35 overlap area display change | | | logical VRAM operation |

4

Table 1   (continued)

| Graphic Event | Drive Mode | Display Priority Order | Drawing Operation |
|---|---|---|---|
| 36 non-active window area ON | | | logical access area |
| 37 non-active window area scroll display | partial update | fourth level | |
| 38 full image field display | multi-field refresh | lowest level | |

The "partial update" in Table 1 represents a drive scheme for scanning only scan lines of a partial update area, and the "multi-field refresh" represents a one-frame scan scheme by scanning N fields (N = 2, 4, 8,..., $2^N$) in multi-interlaced scanning (drive scheme described in US-A-5 058 994). The "display priority order" represents an order designated beforehand. The operability of the man-machine interface has the top priority, so that graphic event 31 (i.e., mouse shift display) has the highest priority, and the priority order is lowered in the order of graphic events 33, 34, 37, and 38. The "drawing operation" represents an internal drawing operation in the graphic processor.

The mouse shift display has the top priority because the pointing device aims at quickly (real time) reflecting the will of the operator in the computer. The next important factor is a character input from the keyboard. The character input is generally buffered, and its real-time response is lower than that of the mouse. The screen update within the window as a result of the key input need not always be real-time with the key input. A line subjected to key input operations has a higher priority. A relationship between the scroll display within another window and an overlap area is changed depending on system setup specifications. Line scroll is performed under an active window.

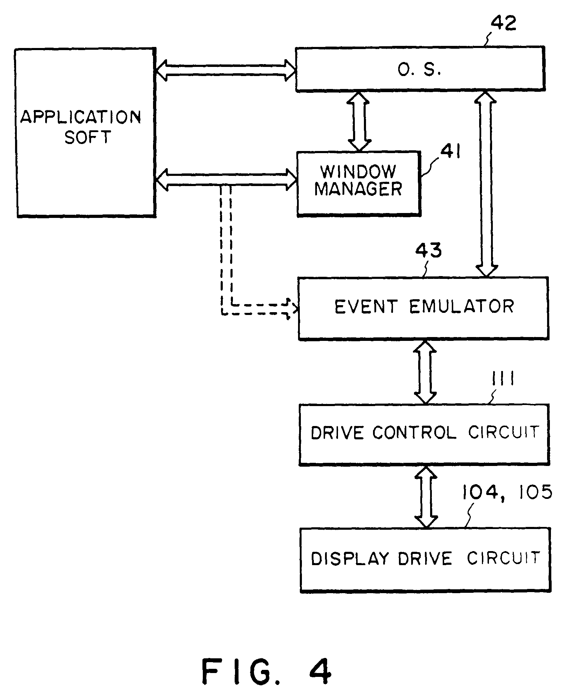

A screen display control program shown in Fig. 4 has a function for accepting external display requests 31 to 38 through the illustrated communication procedures and transferring image information to the ferro-electric liquid crystal display device (FLCD) 101 shown in Fig. 1A. Once a display content update request is generated, the screen display control program determines an update area and drawing processing of the VRAM (image information memory) required for this updating in accordance with the display priority order, and selects image information to be sent to the display device 101 and then transfers them thereto in synchronism therewith.

A window manager 41 and an operating system (OS) 42 are used in the communication procedures in Fig. 4. An "MS-DOS" (tradename) or a "XENIX" (tradename) available from Microsoft Corp., U.S.A., a "UNIX" (tradename) available from AT & T, U.S.A., or an "OS/2" (tradename) available from Microsoft Corp., U.S.A. can be used as the operating system (OS) 42. An "MS-Windows ver 1.03" or "ver 2.0" (tradename) available from Microsoft Corp., U.S.A., an "OS/2 Presentation Manager" available from Microsoft Corp., U.S.A., an "X-Window" as a public domain, or a "DEC-Window" (tradename) available from Digital Equipment Corp, U.S.A. can be used as the window manager 41. An event emulator 43 may comprise an "MS-DOS & MS-Windows" or "UNIX & X-Window".

The "partial update" used in the present invention is to scan only scan lines of a partial update area. Since the FLCD has a memory function, high-speed partial update can be performed. The present invention presumes that high-speed update of display information by the computer system on the full image field is not frequently performed as instantaneous operations. For example, information from, e.g., a pointing device (= mouse or the like) need only be displayed at a speed of 30 Hz or less. If the speed is higher than the speed of 30 Hz, human eyes cannot catch the movement of the cursor. Similarly, if the speed of smooth scroll (scroll of each line) which requires a display of the highest speed is too high, human eyes cannot catch the scrolled contents. Scrolling is often performed not in units of lines but characters in practice, or performed in units of blocks. The scroll function is often used in document editing in a computer system. Scrolling does not aim at smooth scrolling but at a shift from one line to another line. In this sense, a sufficient scroll speed is 10 lines/sec in units of lines in practice.

When a mouse font has a 32 x 32 dot format and partial update scan for the FLCD is performed in accordance with non-interlaced scan, the following response speed can be obtained:

$$32 \text{ lines x } 100 \text{ }\mu\text{sec/line} = 3.2 \text{ msec}$$

$$\cong 312 \text{ Hz} \tag{1}$$

Line scrolling at 10 lines/sec corresponds to an image update speed at a non-interlaced scan frequency of 10 Hz. Although flickering occurs at a frequency of 10 Hz, strictly speaking, a change in movement of information in units of lines is larger than the magnitude of flickering, thus posing no practical problems. The number of scan lines to be non-interlaced scanned during scrolling in units of lines is given as follows:

$$(1/10 \text{ Hz})/100 \text{ }\mu\text{sec} = 1,000 \text{ (lines)} \tag{2}$$

A data format consisting of the image information having scan line address information and the communication sync means using the signal SYNC are used to realize a liquid crystal display apparatus based on the partial update scan algorithm in the graphic controller to be described below.

The image information is generated by the graphic controller 102 in the main unit and is transferred to the display panel 103 by the signal transfer means shown in Figs. 1A and 2. The graphic controller 102 uses a CPU (Central Processing Unit to be referred to as a GCPU 112 hereinafter) and a VRAM (image information memory) 114 to control management and communication between a host CPU 113 and the liquid crystal display device 101. The control method of the present invention can be mainly realized by the graphic controller 102.

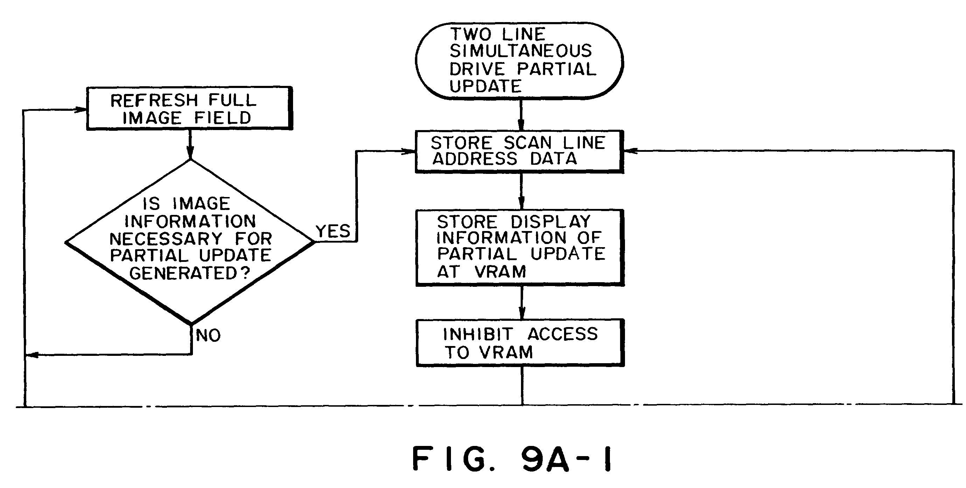

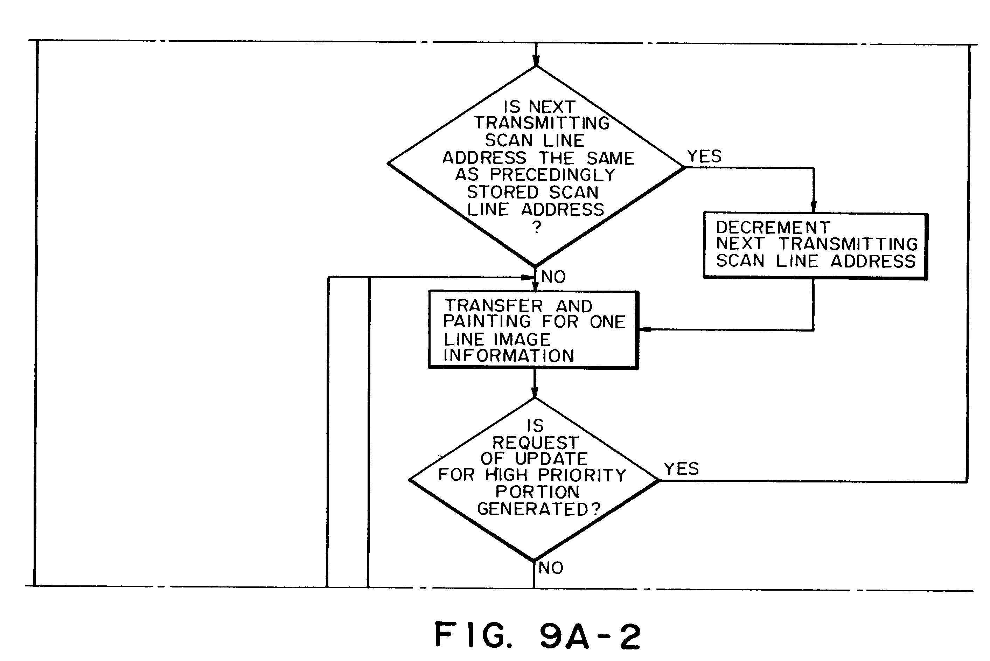

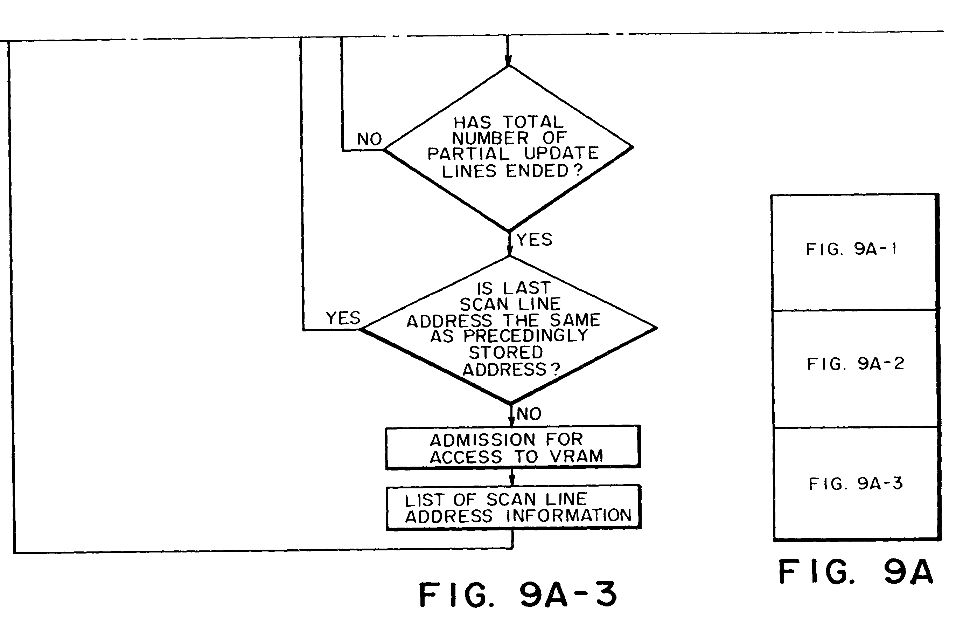

Fig. 9A shows a partial update algorithm according to a preferred embodiment of the present invention in a two-line simultaneous drive mode. Display information (e.g., a pointing device and a pop-up menu) necessary for partial update on the ferro-electric liquid crystal display device is registered in a graphic microprocessor beforehand. When partial update of information from the host CPU 113 is required, the partial update routine is started.

In the partial update routine, a scan line address (i.e., a scan line address corresponding to the last scan in refresh scan prior to partial update or in partial update scan for performing an intrawindow scroll display) prior to routine branching, and a remaining scan line count are stored in a register prepared beforehand in the graphic microprocessor. These data are used to restore the normal refresh routine or the partial update for the intrawindow scroll display. Partial update image information is stored in the VRAM 114. In this case, the host CPU 113 is allowed to access the VRAM 114 through the graphic microprocessor 112. The storage state address and a storage area of the partial update image information in the VRAM 114 are managed by the graphic microprocessor 112. Upon completion of storage of the image information in the VRAM 114, access to the VRAM 114 is inhibited to check that the previously saved scan line address is different from the partial update start scan line address. In this case, since the two-line scan is performed [while the Nth scan line is driven for write access, the (N+α)th (α > 1, 2,...) scan line is driven for erasure], the partial update start scan line address is decremented or incremented by one so as to prevent the information on the same line from being continuously transmitted if the scan line addresses are the same. Transfer of image information to the ferro-electric liquid crystal display device 101 is started. While the graphic microprocessor 112 monitors a request of high priority partial update, it transfers one-line partial update image information in the form complying with the above signal transfer scheme. At the end of image transfer in the partial update mode, the graphic microprocessor 112 checks that the scan line address saved at the start of partial update is different from the scan line address of the partial update last line, thereby allowing access of the VRAM 114 and hence completing the partial update routine.

When the two-line simultaneous drive waveform is used to increase the frame frequency in the ferro-electric liquid crystal display device 101, the graphic microprocessor monitors the transfer scan line address within the partial update routine, thereby preventing continuous transfer of image information on the same scan line address.

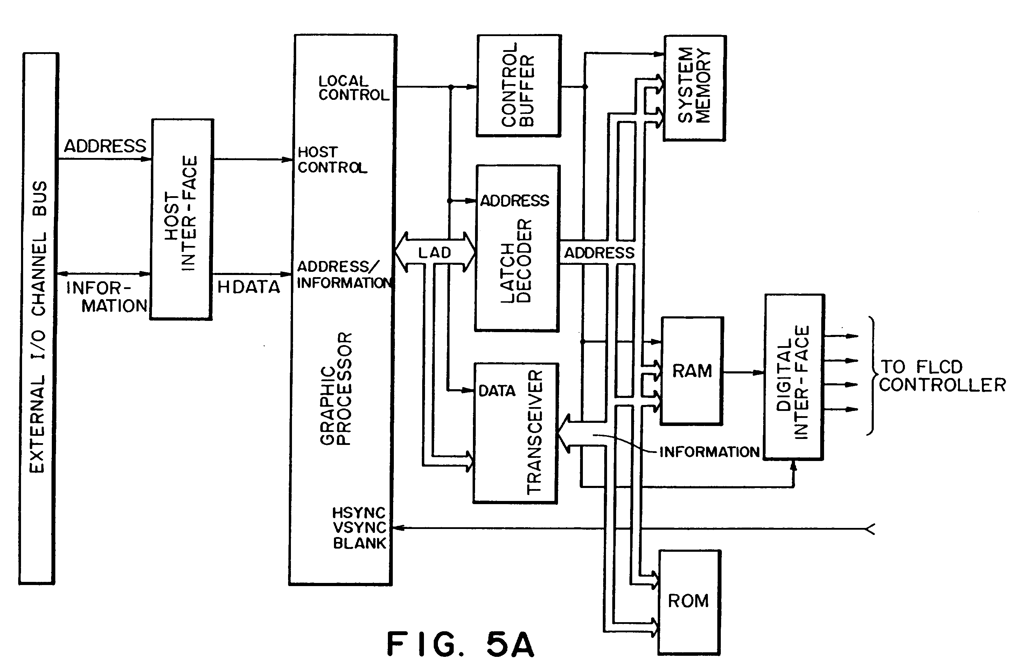

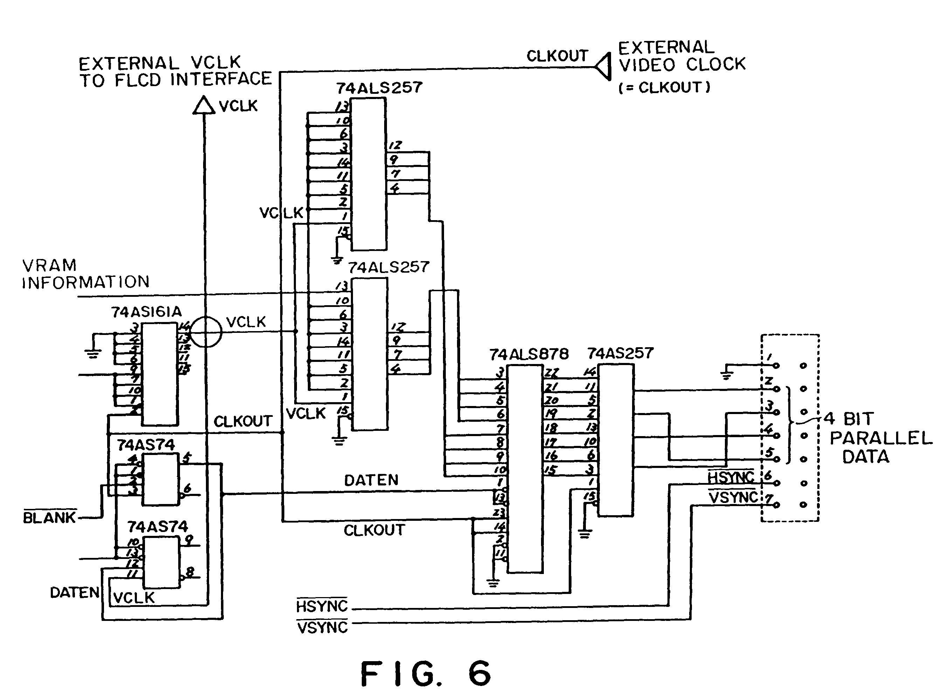

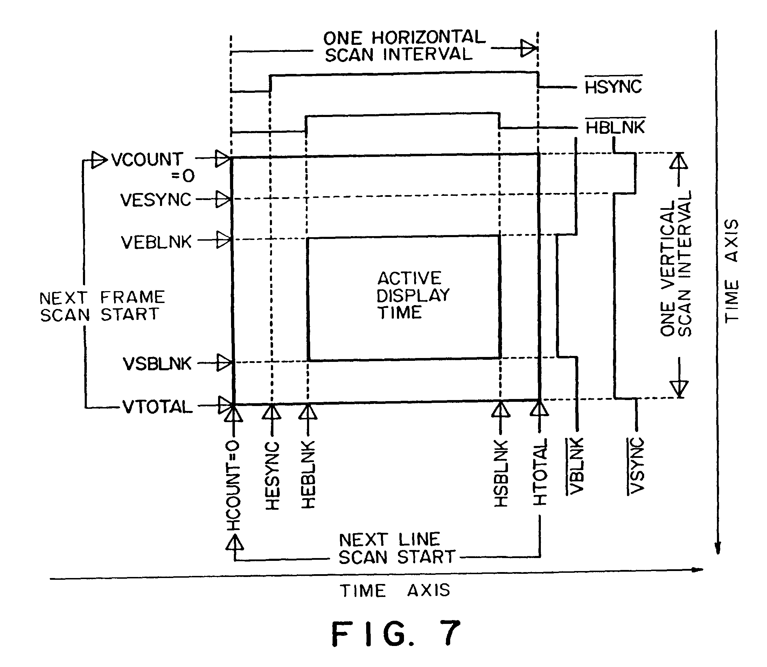

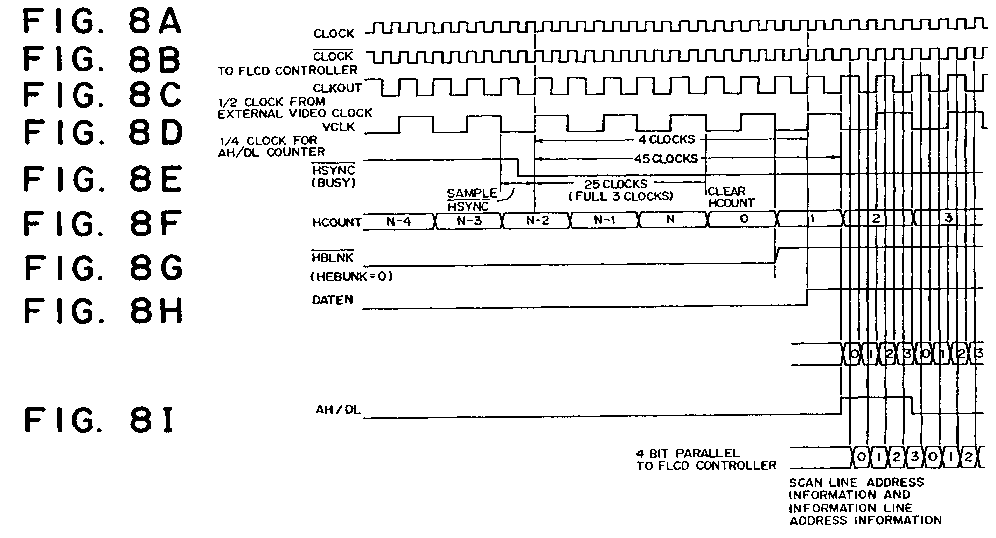

Fig. 5A is a block diagram of the graphic controller 102, Fig. 6 is a block diagram of a digital interface, and Figs. 7 and 8 are timing charts of information transfer.

The graphic controller 102 used in the present invention is greatly different from a conventional controller in that a graphic processor 501 has its own system memory 502, and performs execution and management of a drawing instruction for a RAM 503 in addition to management of the RAM 503 and a ROM 504, and information transfer from a digital interface 505 to the FLCD controller and management of a drive method of the FLCD can be independently programmed.

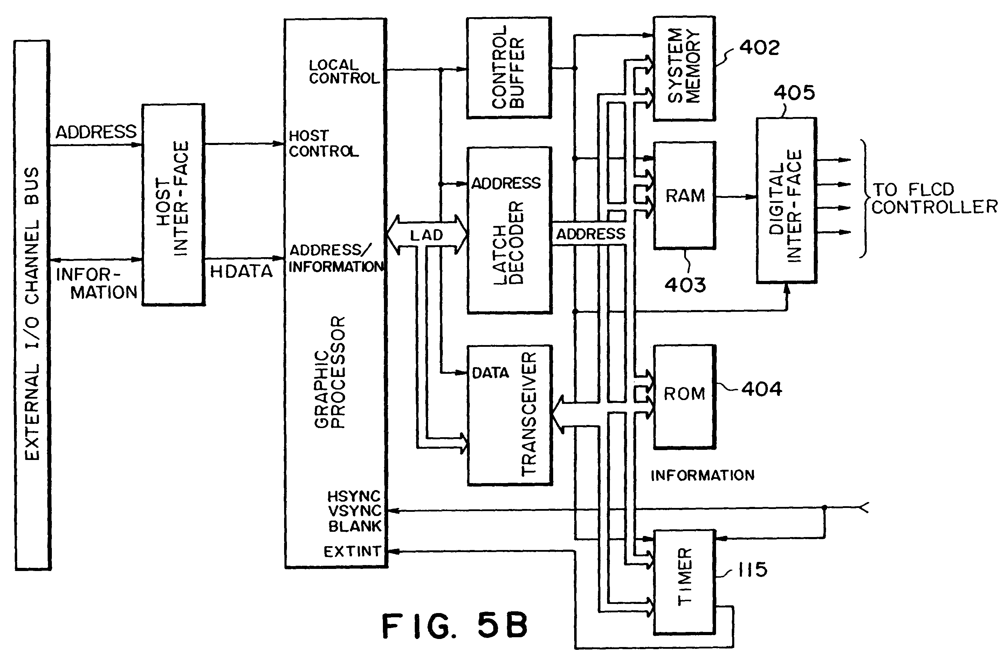

The digital interface 505 shown in Fig. 6 sends information from the VRAM in the form of 5 bits/clock (clock = data transfer clock) in the last stage in synchronism with the drive circuits 104 and 105 of the display panel 103 in response to an external sync signal $\overline{HSYNC}/\overline{VSYNC}$ from the FLCD controller 111. Fig. 7 shows timings of full image field update of the FLCD. Parameters in Fig. 7 are the same as those in the timing chart of information transfer of Fig. 7. One-line image information transfer is started when the signal $\overline{HSYNC}$ (Fig. 8) becomes active (low level in this case, i.e., active low). The signal $\overline{HSYNC}$ is set at low level by the FLCD controller 111, and the signal $\overline{HSYNC}$ of low level represents an information request from the panel 103. The information request from the panel 103 is received by the graphic processor 501 in Fig. 5 and is processed herein at timings shown in Figs. 8A to 8I. In the timing charts of Figs. 8A to 8I, the signal $\overline{HSYNC}$ of the information request from the panel 103 is sampled within one period (in other words, a low interval of a signal VCLK) of an external video clock (CLKOUT) (in this case, the signal VCLK is actually input to the graphic processor 501, and the processor 501 samples during the low interval). A horizontal counter HCOUNT of the processor 501 is cleared after a lapse of 2.5-clock interval of the signal VCLK. The parameters HESYNC and HEBLNK in Fig. 7 are programmed to disable (high level) a signal $\overline{HBLNK}$ of Fig. 7 and Figs. 8A to 8I prior to HCOUNT = 1. In the circuit of Fig. 6, a signal DATEN goes active (high) after a lapse of a 1/2-clock interval of the signal VCLK, as shown in Figs. 8A to 8I. After a further lapse of a 1/2-clock interval, i.e., after a lapse of a 4.5-clock interval judging from sampling of the signal $\overline{HSYNC}$, the next one-line data is transferred from the VRAM to the FLCD controller 111 every 4 bits.

Line information transferred in this case is transferred, as indicated in the lower right portion of Figs. 8A to 8I. More specifically, scan line address information (i.e., corresponding to a scan line number) is sent every 4 bits, and then the original one-line display information is transmitted. In this case, the FLCD controller 111 uses the signal AH/DL to distinguish the scan line address information from the display information. When the signal AH/DL is set at high level, it represents the scan line address information. However, when the signal AH/DL is set at low level, it recognizes the display information. Therefore, the FLCD selects a scan line in accordance with the scan line address information and is written with the display information. When the scan line address information from the graphic controller of Fig. 5A is sent upon being incremented by one, the FLCD is driven by interlaced scan when the number of scan lines is incremented every other number, or the FLCD is driven by m-line multi-interlaced scan when the number of scan lines is incremented every $\underline{m}$ lines. Therefore, the drive method of the display can be controlled.

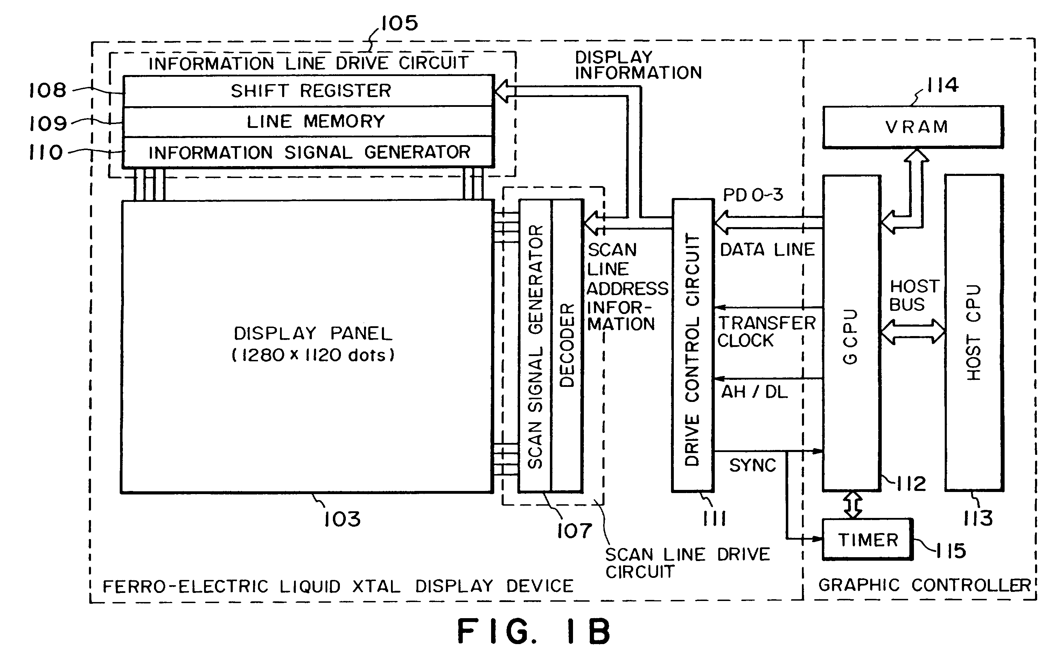

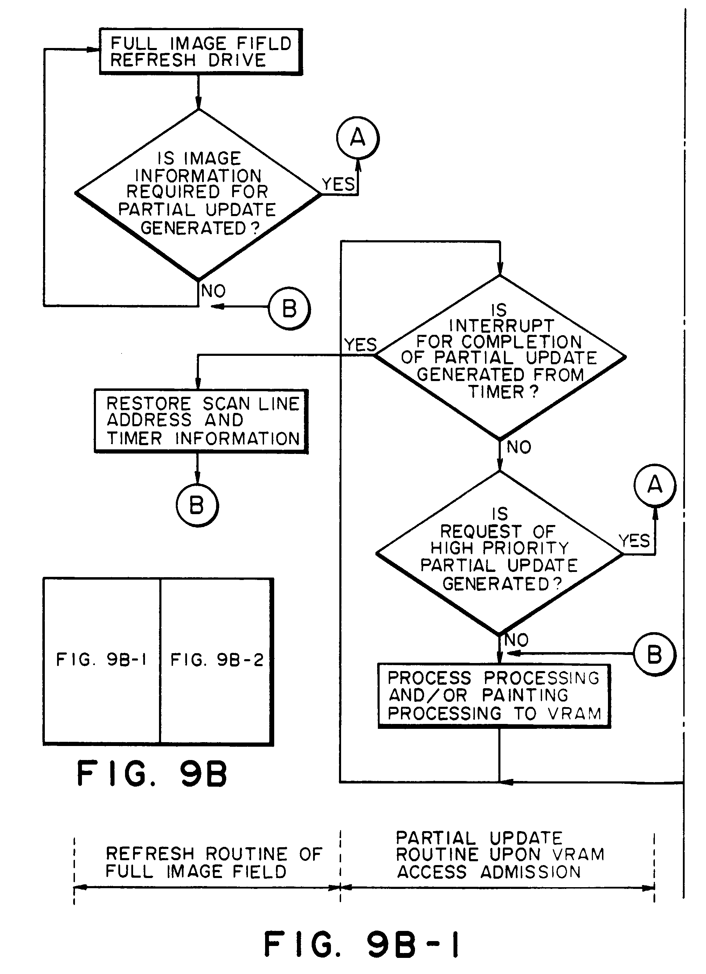

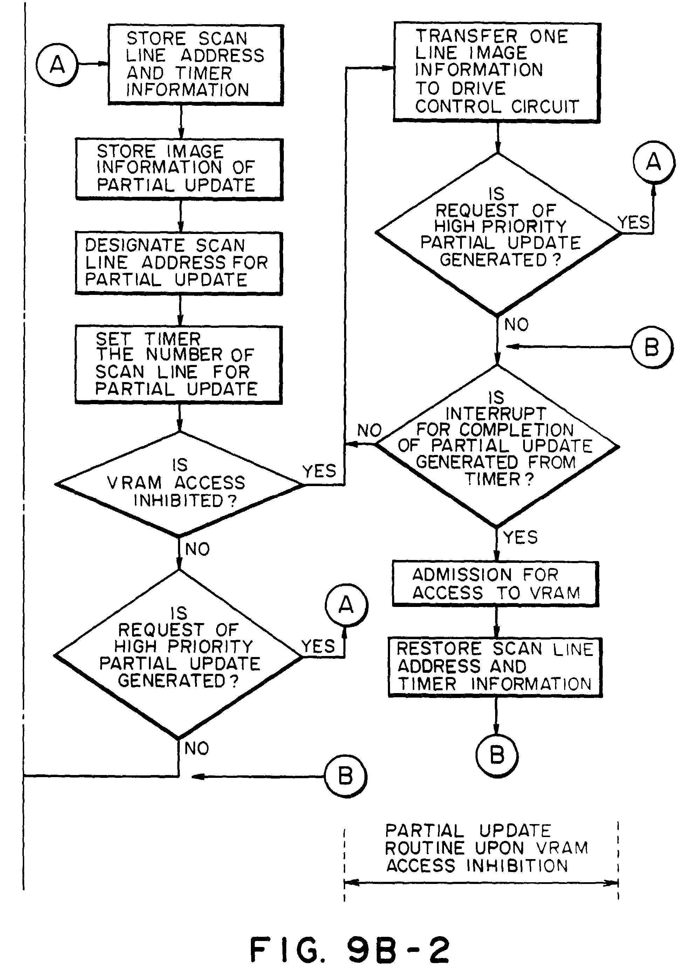

Fig. 9B shows another partial update algorithm. The corresponding system is shown in Fig. 1B. The arrangement shown in Fig. 1B is obtained by adding a timer 115 to the system shown in Fig. 1A.

In this partial update routine, the scan line address prior to branching (generation of a request of high priority partial update, i.e., Ⓐ) shown in Fig. 9B and a remaining scan line count are saved in a register prepared beforehand in a GCPU 112 as information for restoring a normal refresh routine after the end of partial update. The partial update image information is stored in a VRAM 114. In this case, a host CPU 113 is allowed to access the VRAM 114 only through the GCPU 112. The storage state address and the storage area of the partial update image information are managed by the GCPU 112.

At the end of storage of the image information in the VRAM 114, in order to synchronize storage of the image information in the VRAM 114 with partial update scan of the display panel 103, the number of partial update scan lines is set in a timer 115. The timer counts down the set number of partial update scan lines. When the count reaches the set number of partial update scan lines, an interrupt is sent to the GCPU 112. The GCPU 112 inhibits or allows access of the VRAM 114 in accordance with types of graphic events of the image information until the interrupt is generated from the timer 115. When an access of the VRAM 114 is inhibited, transfer of the image information to a drive control circuit 111 is started in units of lines in the form complying with the above signal transfer scheme. When a request of high priority partial update is not generated, the image information is transferred to the drive control circuit 111 until an interrupt representing the end of partial update scan is generated by the timer 115. When transfer of the partial update information is completed, the GCPU 112 allows access of the VRAM 114 to restart refresh driving.

When an access of the VRAM 114 is allowed and a request of high priority partial update is not generated, the GCPU 112 manages and executes process processing (e.g., storage of font information in a RAM (not shown) except for the VRAM 114, and communication with the host CPU 113) and image information storage processing (e.g., scroll which does not result in a failure even if information from the VRAM 114 is changed during processing). When the interrupt from the timer 115 is received by the GCPU 112, front-layer refresh driving is started.

In the information processing system, the partial update scan interval on the display panel 105 is managed by controlling a scan interval (i.e., (number of partial update scan lines) x (horizontal scan interval)). New image information can be stored in the VRAM 114 without interfering synchronization between partial update scan under execution and the VRAM 114 within the update interval.

When a partial update of image information occurs, the timer 115 manages the number of partial update scan lines to synchronize the partial update scan of the panel 103 with storage of the image information in the VRAM 114. At the same time, execution of processing in which access of the VRAM 114 is not inhibited can be performed with the partial update. The processing speed of the GCPU 112 can be increased.

Fig. 5B is a block diagram of the graphic controller 102 when the partial update algorithm shown in Fig. 9B is used. The graphic controller 102 is greatly different from a conventional one in that the graphic processor itself has a system memory 402, and performs execution and management of a drawing instruction for a RAM 403 in addition to management of the RAM 403 and a ROM 404, information transfer from a digital interface 405 to the FLCD controller and management of the drive method of the FLCD can be independently programmed, and the timer 115 can manage the information transfer to the FLCD controller.

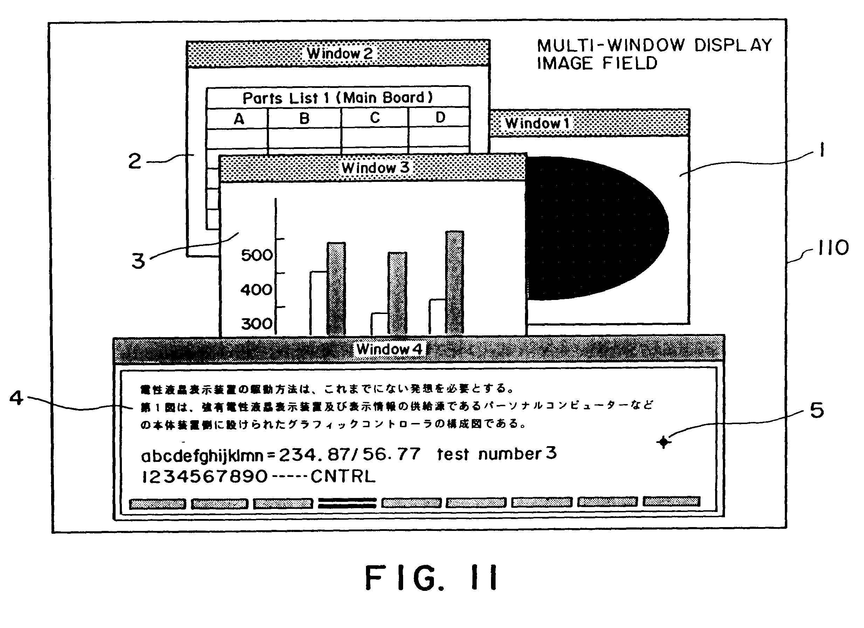

Fig. 11 shows a multi-window display screen 110. Window 1 represents a layer obtained by expressing a summation result in a circle graph. Window 2 represents a layer obtained by expressing the summation result of window 1 in a table. Window 3 represents a layer obtained by expressing the summation result of window 1 in a bar graph. Window 4 represents a layer during documentation. A mouse of a pointing device is represented by reference numeral 5. Windows 1 to 3 are kept in a still state. Assume that document editing operations such as smooth scroll, insertion, deletion of words and clauses, and block shift are performed and the mouse 5 is moved. Smooth scroll and mouse shift use partial update scan as necessary information in the ferro-electric liquid crystal display device 101. When the full image field is constituted by 1,120 scan lines and is scanned with one horizontal scan time of 80 $\mu$s, the frame frequency becomes about 10 Hz, which cannot cope with normal mouse movement ($\geq$ 30 Hz). However, when the algorithm of the present invention is applied to give higher priority to the partial update by the mouse shift than document edit operations on window 4, the mouse partial update routine is initialized upon mouse shift during scrolling, and a mouse write operation is started. At this time, the time required for branching the program into the mouse partial update routine is a maximum of one horizontal scan interval. For example, as exemplified in equation (1), when a font size of the mouse has a 32 x 32 dot matrix, a period required for writing a mouse on the display panel 103 becomes 3.2 msec. During this period, the scroll operation is disabled. However, this period is very short not to adversely affect the scroll speed. After the mouse is written, the partial update scan of window 4 is restored. When a mouse shift request is generated again, the main flow is immediately branched into the mouse partial update routine, and the mouse is written. In this manner, in a display device having a memory function such as the ferro-electric liquid crystal display device 101 and driven at a low frame frequency, the partial update priority is set such that the shift of the pointing device (mouse) has the top priority, thereby realizing the multi-window, multi-task display function.

The drive interval of one scan line in the FLCD is generally about 100 μsec. If the drive interval of one scan line is given as 100 μsec and a minimum frequency free from flickering is given as 30 Hz, no flickering occurs as a still image with the following numbers of scan lines (scan and drive):

For non-interlaced scan scheme:

$$(1/30 \text{ Hz})/100 \text{ μsec} \cong 333 \text{ (lines)} \qquad (3)$$

For interlaced scan scheme:

$$(1/30 \text{ Hz}) \times 2/100 \text{ μsec} \cong 666 \text{ (lines)} \qquad (4)$$

For m-line multi-interlaced scan scheme:

$$(1/30 \text{ Hz}) \times m/100 \text{ μsec} \cong 333 \times m \text{ (lines)} \qquad (5)$$

According to experiments, it was found that no flickering occurred for m = 32. That is, if the display panel 103 has the following number of scanning lines:

$$(1/30 \text{ Hz}) \times 32/100 \text{ μsec} \cong 333 \times 32 = 10,656 \text{ (lines)} \qquad (6)$$

a display can be free from flickering. A high-precision flat display panel can be obtained.

"74AS161A", "74AS74", "74ALS257", "74ALS878", and "74AS257" in Fig. 6 are IC numbers, and numerical values in Fig. 6 represent pin numbers.

Also non-interlaced scan is used as a method of scanning an intrawindow scroll display and a font display. In addition, when a still image is to be displayed, the multi-interlaced scan to be described below is used. Table 2 below represents the multi-interlaced scan, and 1°, 2°, 3°,... N° in Table 2 represent codes of scan electrodes from the top to the bottom of the screen.

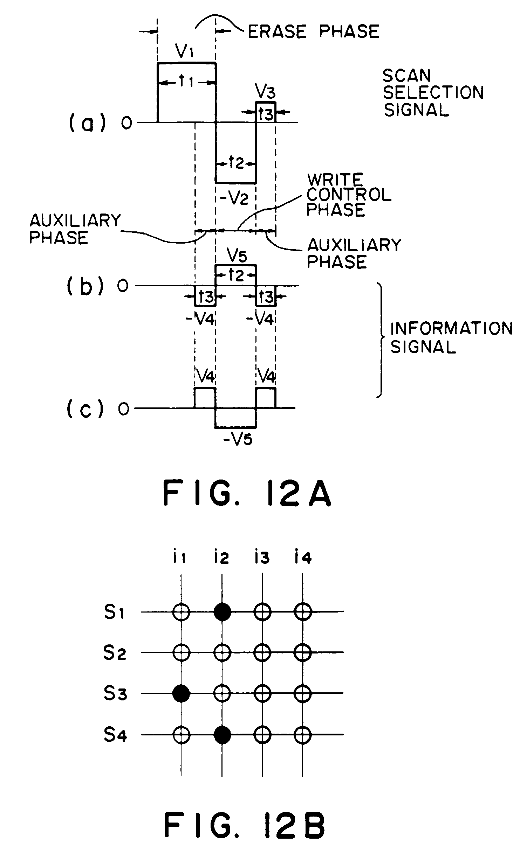

Fig. 12A shows waveforms of drive signals in the liquid crystal element. More specifically, a waveform a represents a selection signal waveform, and information signal waveforms b and c correspond to white image information and black image information, respectively. In the waveform b, a phase having a pulse width t2 and a voltage value V5 is a control phase, and a phase having a pulse width t3 and a voltage value -V4 is an auxiliary phase. The information signals are constituted by the above pulses to reduce image drawbacks such as flickering during non-selection. The selection signal waveform a consists of an erase phase having a pulse width t1 and a voltage value V1 and an auxiliary phase having a pulse width t3 and a voltage value V3. That is, this auxiliary phase compensates for the auxiliary phase of the waveform b. The voltage value V3 preferably falls within the range of 0 < V3 < V1, and I V3 I = I V4 I is preferably established.

Pixels on a scan line selected in an erase phase are preferably simultaneously erased to obtain a black state.

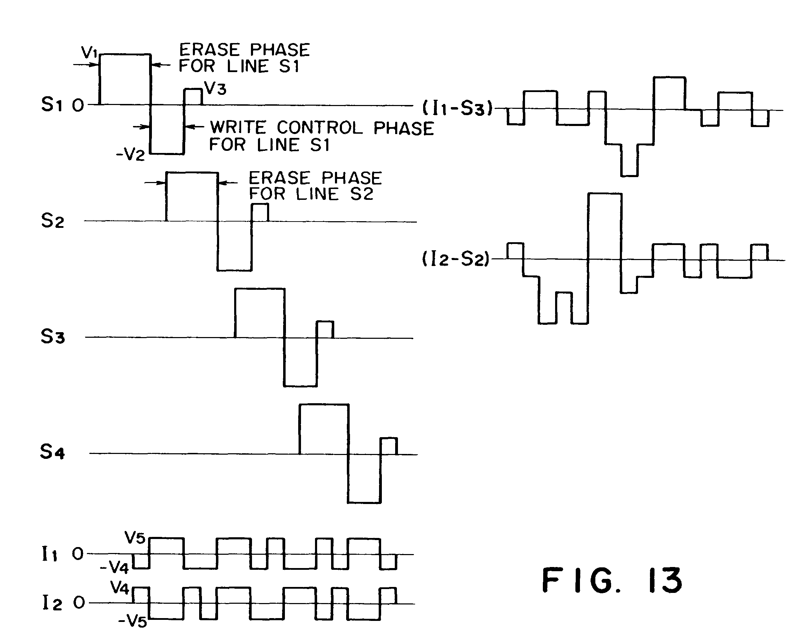

Fig. 13 shows a time-serial waveform when a display of Fig. 12B is performed.

Referring to Fig. 13, scan signal waveforms S1 to S4 correspond to scan signal lines S1 to S4 of Fig. 12B, and information signal waveforms I1 and I2 correspond to information signal lines i1 and i2 of Fig. 12B. Composite waveforms (I1 - S3) and (I2 - S2) are obtained by combining the information signal waveform I1 and the scan signal waveform S3 and combining the information signal waveform I2 and the scan signal waveform S2, respectively.

The sequence in Fig. 13 is used in a preferable embodiment of the present invention since the frame frequency can be set to be high.

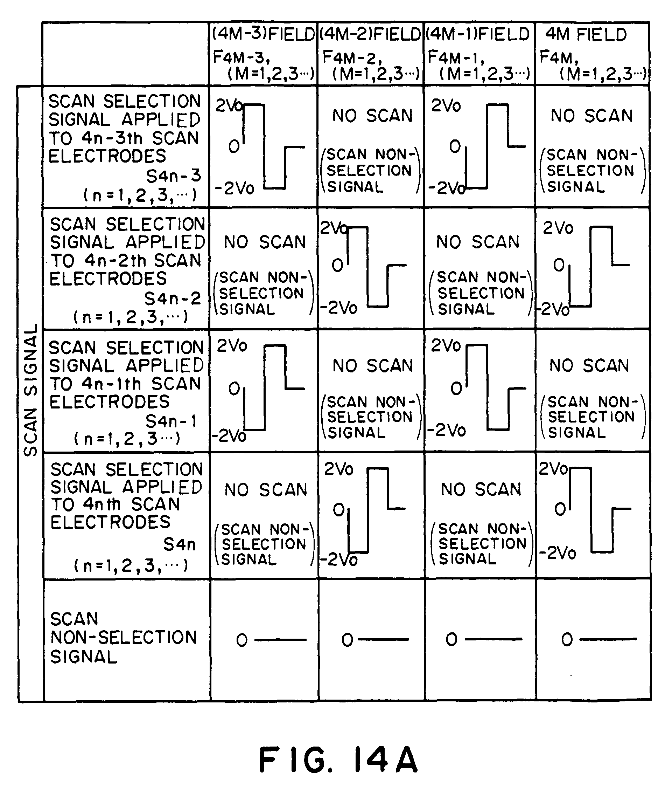

Figs. 14A and 14B show drive waveforms of a multi-interlaced scan drive scheme. Referring to Fig. 14A, scan selection signals $S_{4n-3}$, $S_{4n-2}$, $S_{4n-1}$, and $S_{4n}$ are applied to the (4n-3)th, (4n-2)th, (4n-1)th, and 4nth scan electrodes in (4M-3)th, (4M-2)th, (4M-1)th, and 4Mth fields $F_{4M-3}$, $F_{4M-2}$, $F_{4M-1}$, and $F_{4M}$ (one field is one vertical scan interval; M = 1, 2, 3,...), respectively. Referring to Fig. 14A, the in-phase voltage polarities (voltage polarities with respect to the voltage of the scan non-selection signal) of the scan selection signal $S_{4n-3}$ are opposite to each other. The scan selection signal $S_{4n-3}$ is disabled during scan in the (4M-2)th and 4M fields $F_{4M-2}$ and 4M. The scan selection signal $S_{4n-1}$ is similarly set. In addition, the scan selection signals $S_{4n-3}$ and $S_{4n-1}$ applied within one field interval have different voltage waveforms, and their in-phase voltage polarities are opposite to each other.

Similarly, the in-phase voltage polarities (voltage polarities determined with reference to the voltage of the scan non-selection signal) of the scan selection signal $S_{4n-2}$ are opposite to each other in the (4M-2)th and 4Mth fields $F_{4M-2}$ and $F_{4M}$. At the same time, the scan selection signal $S_{4n-2}$ is disabled during scan for the (4M-3)th and (4M-1)th fields $F_{4M-3}$ and $F_{4M-1}$. The scan selection signal $S_{4n}$ is similarly set. The scan selection signals $S_{4n-2}$ and $S_{4n}$ applied within one field interval have different voltage waveforms, and the in-phase voltage polarities are opposite to each other.

In the scan drive waveforms shown in Fig. 14A, a phase for disabling the entire screen (e.g., a voltage of 0 V is simultaneously applied to all pixels constituting the screen) is the third phase. The third phase of the scan selection signal is set at a voltage of 0 V (the same voltage level as that of the scan non-selection signal).

Referring to Fig. 14B, as an information signal applied to the signal electrode in the (4M-3)th field $F_{4M-3}$, a white signal (this signal is combined with the scan selection signal $S_{4n-3}$ to apply a voltage 3V0 exceeding the threshold voltage of the ferro-electric liquid crystal at the second phase to form a white pixel) and a hold signal (this signal is combined with the scan selection signal $S_{4n-3}$ to apply voltages ±V0 lower than the threshold voltage of the ferro-electric liquid crystal to a pixel) are selectively applied to the scan selection signal $S_{4n-3}$; and a black signal (this signal is combined with the scan selection signal $S_{4n-1}$ to apply a voltage -3V0 exceeding the threshold voltage of the ferro-electric liquid crystal at the second phase to form a black pixel) and a hold signal (this signal is combined with the scan selection signal $S_{4n-1}$ to apply voltages ±V0 lower than the threshold voltage of the ferro-electric liquid crystal to a pixel) are selectively applied to the scan selection signal $S_{4n-1}$. The scan non-selection signal is applied to the (4n-2)th and 4nth scan electrodes, so that the information signals are applied thereto without changes.

As the information signals applied to the signal electrodes in the (4M-2)th field $F_{4M-2}$ following the (4M-3)th field $F_{4M-3}$ described above, the black signal and the hold signal are selectively applied to the scan selection signal $S_{4n-2}$ in the same manner as described above, and the white signal and the hold signal are selectively applied to the scan selection signal $S_{4n}$ as described above. The scan non-selection signal is applied to the (4n-3)th and (4n-1)th scan electrodes, so that the information signals are applied without changes.

As information signals applied to the signal electrodes in the (4M-1)th field $F_{4M-1}$ following the (4M-2)th field $F_{4M-2}$ described above, the black signal and the hold signal are selectively applied to the scan selection signal $S_{4n-3}$ as described above, and the white signal and the hold signal are selectively applied to the scan selection signal $S_{4n-1}$ as described above. The scan non-selection signal is applied to the (4n-2)th and 4nth scan electrodes, so that the information signals are applied without changes.

As information signals applied to the signal electrodes in the 4Mth field $F_{4M}$ following the (4M-1)th field $F_{4M-1}$ described above, the black signal and the hold signal are selectively applied to the scan selection signal $S_{4n-2}$ as described above, and the white signal and the hold signal are selectively applied to the scan selection signal $S_{4n}$ as described above. The scan non-selection signal is applied to the (4n-3)th and (4n-1)th scan electrodes, so that the information signals are applied without changes.

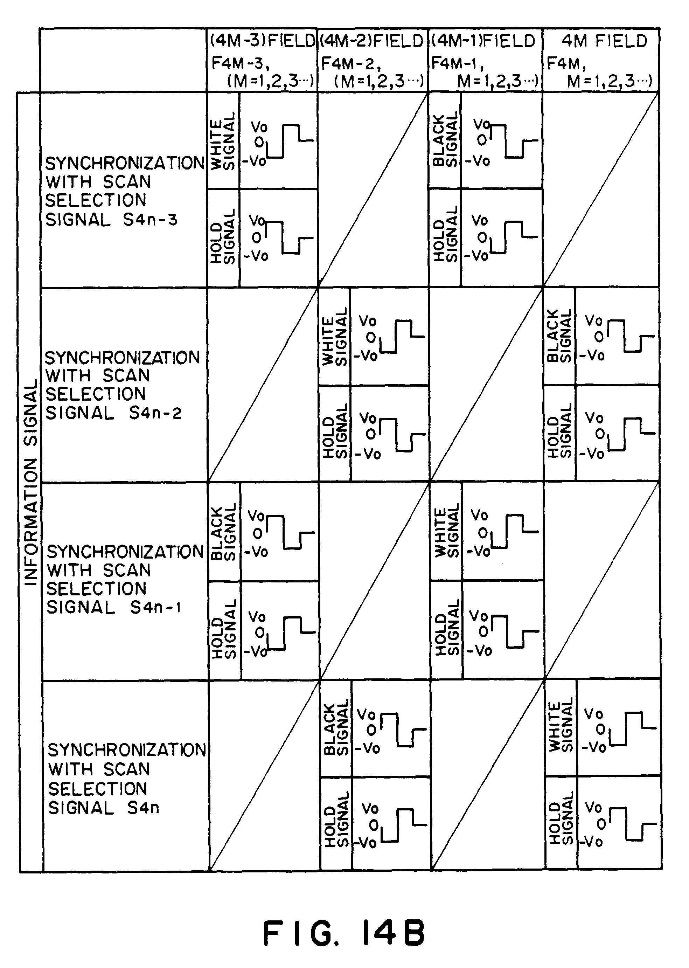

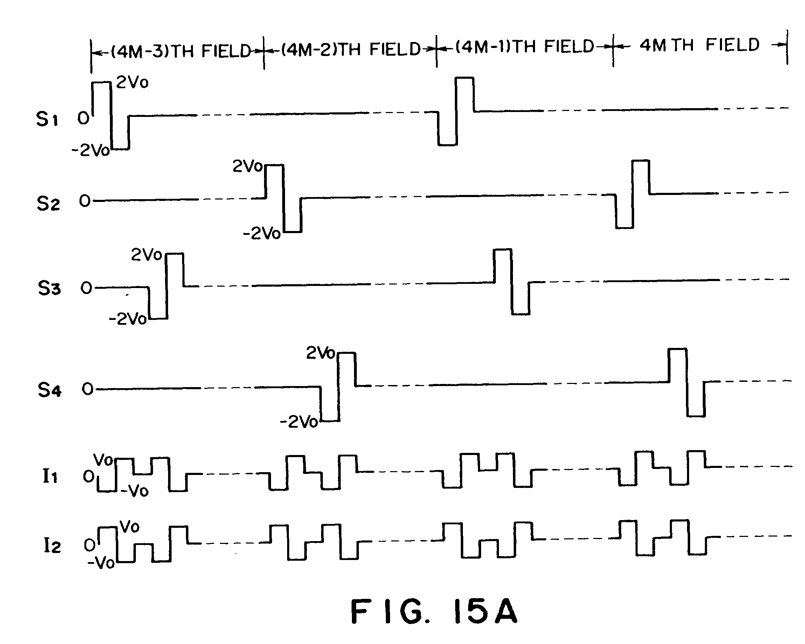

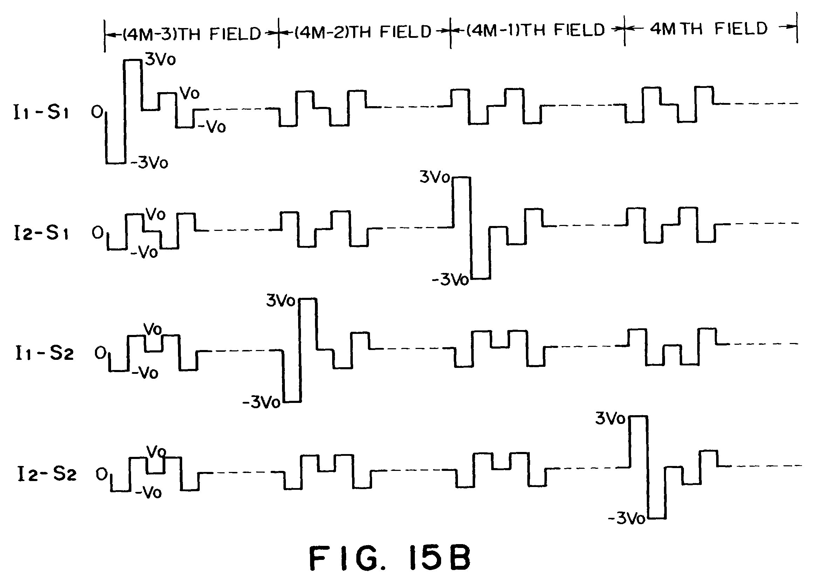

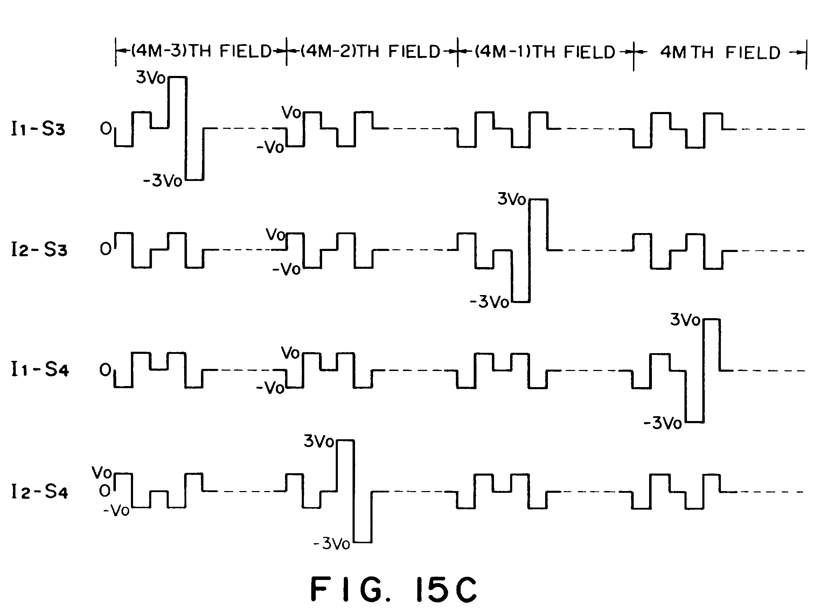

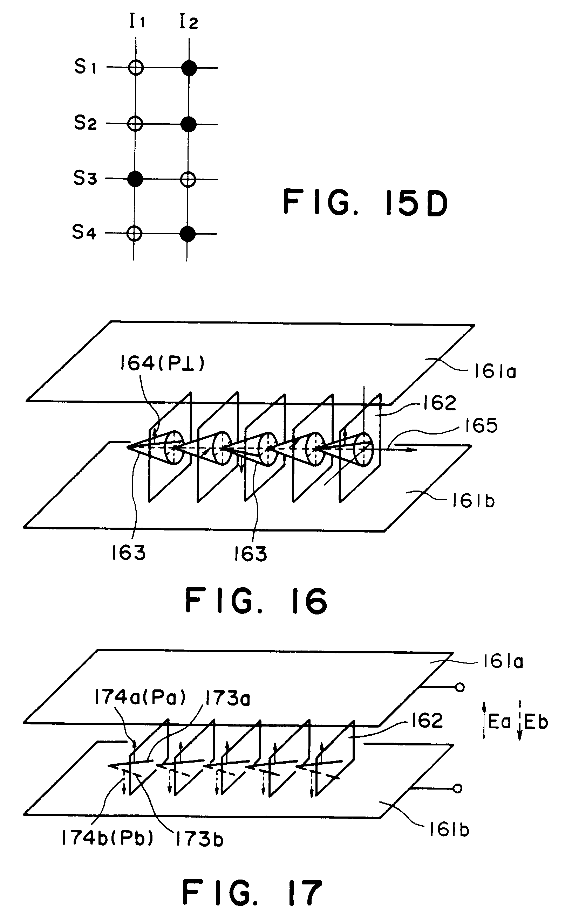

Figs. 15A, 15B, and 15C are timing charts obtained when a display state of Fig. 15D is obtained by the drive waveforms shown in Figs. 14A and 14B. A hollow dot in Fig. 15D represents a white pixel, and a solid dot represents a black pixel. I1 - S1 in Fig. 15B is a time-serial waveform of a voltage applied to an intersection between the scan electrode S1 and the signal electrode I1. I2 - S1 is a time-serial waveform of a voltage applied to an intersection between the scan electrode S1 and the signal electrode I2. Similarly, I1 - S2 is a time-serial waveform of a voltage applied to an intersection between the scan electrode S2 and the signal electrode I1. I2 - S2 is a time-serial waveform of a voltage applied to an intersection between the scan electrode S2 and the signal electrode I2.

The present invention is not limited to the drive waveforms described above. For example, the apparatus may multi-interlace scan every fifth, sixth, seventh, eighth, and preferably every ninth or more scan lines. The scan selection signal may have a waveform whose polarity is inverted every field, as shown in Fig. 14A, or may have the same waveforms in units of fields.

According to the present invention, the drive sequence shown in Fig. 13 can be used as multi-interlaced scan drive waveforms shown in Figs. 14A to 15B.

Fig. 16 illustrates an arrangement of a ferro-electric liquid crystal cell. Substrates (glass plates) 161a and 161b are coated with transparent electrodes such as $In_2O_3$, $SnO_2$ or ITO (indium-tin-oxide) films. A liquid crystal molecular layer 162 is formed between the substrates 161a and 161b such that a liquid crystal having an SmC* phase is aligned in a direction perpendicular to the glass surface. A thick line 163 represents a liquid crystal molecule. This liquid crystal molecule 163 has a bipolar moment (P⊥) in a direction perpendicular to the molecule. When a voltage exceeding a predetermined threshold value is applied across the substrates 161a and 161b, a helical structure of the liquid molecule 163 is untwisted, and all the bipolar moments (P⊥) 164 are directed toward the direction of electric field, thus changing the aligning direction of the liquid molecules 163. Each liquid crystal molecule has an elongated shape, and the refractive index anisotropy in the major axis is different from that in the minor axis. When polarizers are arranged on the upper and lower surfaces of the opposite glass plates in a positional relationship of crossed nicols, it is easily understood that the resultant structure serves as a liquid crystal modulation element whose optical characteristics are changed by the polarities of the applied voltages. In addition, when the thickness of the liquid crystal cell is sufficiently small (e.g., 1 μ), even it no electric field is applied, the helical structure of the liquid crystal molecule is untwisted, and the bipolar moment Pa or Pb is directed upward (174a) or downward (174b), as shown in Fig. 17. When an electric field Ea or Eb (the fields Ea and Eb have different polarities) having a predetermined threshold value is applied to the cell for a predetermined period of time, the bipolar moment is changed to direct upward 174a or downward 174b with respect to the electric field vector of the electric field Ea or Eb, as shown in Fig. 17. Therefore, the liquid crystal molecules are aligned in a first stable state 173a or a second stable state 173b.

There are two advantages derived from use of a ferro-electric liquid crystal as an optical modulation element. First, a response speed is very high. Second, the alignment of the liquid crystal molecules is bistable. The second point will be described with reference to Fig. 17. When the electric field Ea is applied, the liquid crystal molecules are aligned in the first stable state 173a. This state is stable even if the electric field is withdrawn. When the counter electric field Eb is applied to the cell, the liquid crystal molecules are aligned in the second stable state 173b. The molecular direction is changed but is kept unchanged even if the electric field is withdrawn. Unless the electric field Ea does not exceed a predetermined threshold value, the aligning state is kept unchanged. In order to effectively achieve high-speed operation and obtain a bistable state, the thickness of the cell is preferably minimized, and generally falls within the range of 0.5 $\mu$ to 20 $\mu$ and more preferably 1 $\mu$ to 5 $\mu$.

As has been described above, in the information processing apparatus using the ferro-electric liquid crystal display device, when the two-line simultaneous drive waveform is used to increase the frame frequency, the graphic microprocessor monitors the transfer scan line address within the partial update routine. Therefore, continuous transfer of the image information of the same scan line address can be prevented.

In partial update for the display device having a memory function such as a ferro-electric liquid crystal display device, there is provided a circuit for managing partial update scan interval of the display panel of the graphic event. The partial update can be performed without inhibiting the VRAM access. That is, the partial update scan and storage of the image information in the VRAM can be simultaneously performed by the GCPU. A high-speed display application can be applied to a display device such as a ferro-electric liquid crystal display device having a low frame frequency. As a result, smooth, high-speed shift display can be achieved, which is free from flickering.

## Claims

1. An information processing system comprising:

   a driving means having a memory (114) for storing image information, a scanning line driving circuit (107) for applying a first scanning selection signal wave form (-V$_2$) to a first scanning line (S$_1$) among plural scanning lines on a display panel (103), and for simultaneously applying a second scanning selection signal wave form (V$_1$) to a second scanning line (S$_2$) different from said first scanning line (S$_1$), and an information line driving circuit (105) for applying an information signal to plural information lines on said display panel (103); and
   a control means for controlling said driving means to perform a partial rewriting routine for partial rewrite displaying by selecting a predetermined number of scanning lines among all of the scanning lines on said display panel (103);

   wherein a first address (A$_1$) of the scanning line currently subjected to the scanning selection at a routine before the partial rewrite routine is compared with a second address (A$_2$) of the scanning line to be subjected to the scanning selection at the beginning of the partial rewriting, and when the compared addresses are identical, said second address (A$_2$) of the scanning line to be subjected to the scanning selection at the beginning of the partial rewriting is subjected to a decrement or increment.

2. A system according to claim 1, wherein said display panel (103) comprises a ferroelectric liquid crystal sandwiched between a scanning electrode constituting said scanning line and an information electrode constituting said information line.

3. A system according to claim 1, further comprising a processor (112) for inhibiting or permitting an access to said memory (114), so that, after storing into said memory (114) the image information to be displayed by the partial rewriting, the access to said memory (114) is inhibited, and when said first address (A$_1$) thereafter and said second address (A$_2$) then are different, the access to said memory (114) is permitted.

4. A system according to claim 1, wherein said first scanning selection signal wave form (-V$_2$) is a write phase, and said second scanning selection signal wave form (-V$_2$) is an erasing phase.

## Patentansprüche

1. Informationsverarbeitungssystem mit

einer Ansteuereinrichtung mit einem Speicher (114) zur Speicherung von Bildinformationen, einer Abtastzeilen-Ansteuerschaltung (107) zum Anlegen eines ersten Abtast-Auswahlsignalverlaufs (-$V_2$) an eine erste ($S_1$) von mehreren Abtastzeilen eines Anzeigefelds (103) und zum gleichzeitigen Anlegen eines zweiten Abtast-Auswahlsignalverlaufs ($V_1$) an eine zweite, von der ersten Abtastzeile ($S_1$) unterschiedliche Abtastzeile ($S_2$) und einer Informationszeilen-Ansteuerschaltung (105) zum Anlegen eines Informationssignals an mehrere Informationszeilen des Anzeigefelds (103), und
einer Steuereinrichtung zur Steuerung der Ansteuereinrichtung zur Durchführung einer Teil-Wiedereinschreib-Routine für einen Teil-Wiedereinschreib-Anzeigevorgang durch Auswahl einer vorbestimmten Anzahl aller Abtastzeilen des Anzeigefelds (103),

wobei eine erste Adresse ($A_1$) der Abtastzeile, die gerade einer Abtastauswahl bei einer Routine vor der Teil-Wiedereinschreib-Routine unterzogen wird, mit einer zweiten Adresse ($A_2$) der Abtastzeile, die zu Beginn der Teil-Wiedereinschreibung der Abtast-Auswahl zu unterziehen ist, verglichen wird, und wobei die zweite Adresse ($A_2$) der der Abtast-Auswahl zu Beginn der Teil-Wiedereinschreibung zu unterziehenden Abtastzeile einer Erhöhung oder Erniedrigung unterzogen wird, wenn die verglichenen Adressen identisch sind.

2. System nach Anspruch 1, wobei das Anzeigefeld (103) ein ferroelektrisches Kristall aufweist, das zwischen einer die Abtastzeile bildenden Elektrode und einer die Informationszeile bildenden Informationselektrode geschichtet ist.

3. System nach Anspruch 1, das weiterhin eine Verarbeitungsvorrichtung (112) zum Blockieren oder Zulassen eines Zugriffs auf den Speicher (114) aufweist, derart daß der Zugriff auf den Speicher (114) nach Speicherung der durch die Teil-Wiedereinschreibung anzuzeigenden Bildinformationen in den Speicher (114) blockiert ist und daß der Zugriff auf den Speicher (114) zugelassen wird, wenn sich danach die erste Adresse ($A_1$) von der zweiten Adresse ($A_2$) unterscheidet.

4. System nach Anspruch 1, wobei es sich bei dem ersten Abtast-Auswahlsignalverlauf (-$V_2$) um eine Schreibphase und bei dem zweiten Abtast-Auswahlsignalverlauf (-$V_2$) um eine Löschphase handelt.

## Revendications

1. Système de traitement d'informations comportant :

des moyens d'attaque ayant une mémoire (114) destinée à stocker des informations d'image, un circuit (107) d'attaque de ligne de balayage destiné à appliquer une première forme d'onde (-$V_2$) de signal de sélection de balayage à une première ligne de balayage ($S_1$) parmi plusieurs lignes de balayage sur un panneau d'affichage (103), et à appliquer simultanément une seconde forme d'onde ($V_1$) de signal de sélection de balayage à une seconde ligne de balayage ($S_2$) différente de ladite première ligne de balayage ($S_1$), et un circuit (105) d'attaque de ligne d'information destiné à appliquer un signal d'information à plusieurs lignes d'informations sur ledit panneau d'affichage (103) ; et
des moyens de commande destinés à commander lesdits moyens d'attaque pour exécuter un sous-programme de réécriture partielle pour réécrire partiellement un affichage en sélectionnant un nombre prédéterminé de lignes de balayage parmi toutes les lignes de balayage sur ledit panneau d'affichage (103) ;

dans lequel une première adresse ($A_1$) de la ligne de balayage, alors soumise à la sélection de balayage en un sous-programme avant le sous-programme de réécriture partielle, est comparée à une seconde adresse ($A_2$) de la ligne de balayage devant être soumise à la sélection de balayage au commencement de la réécriture partielle, et lorsque les adresses comparées sont identiques, ladite seconde adresse ($A_2$) de la ligne de balayage devant être soumise à l'adresse de balayage au commencement de la réécriture partielle est soumise à une décrémentation à une incrémentation.

2. Système selon la revendication 1, dans lequel ledit panneau d'affichage (103) comporte un cristal liquide ferroélectrique intercalé entre une électrode de balayage constituant ladite ligne de balayage et une électrode d'information constituant ladite ligne d'information.

3. Système selon la revendication 1, comportant en outre un processeur (112) destiné à empêcher ou permettre un accès à ladite mémoire (114), afin que, après le stockage dans ladite mémoire (114) de l'information d'image devant être affichée par la réécriture partielle, l'accès à ladite mémoire (114) soit empêché, et lorsque ladite première adresse ($A_1$), ensuite, puis ladite seconde adresse ($A_2$) sont différentes, que l'accès à ladite mémoire (114) soit permis.

4.  Système selon la revendication 1, dans lequel ladite première forme d'onde ($-V_2$) de signal de sélection de balayage est une phase d'écriture, et ladite seconde forme d'onde ($V_1$) de signal de sélection de balayage est une phase d'effacement.

FIG. IA

FIG. IB

FIG. 2A TRANSFER CLOCK

FIG. 2B AH/DL

FIG. 2C PD 0

FIG. 2D PD 1

FIG. 2E PD 2

FIG. 2F PD 3

FIG. 2G SYNC

DISPLAY INFORMATION
SCAN LINE ADDRESS INFORMATION
HORIZONTAL SCAN INTERVAL

EP 0 416 172 B1

FIG. 3

FIG. 4

FIG. 5A

FIG. 5B

FIG. 6

FIG. 7

TIME AXIS

TIME AXIS

ONE VERTICAL SCAN INTERVAL

HSYNC

HBLNK

VSYNC

VBLNK

HTOTAL

HSBLNK

ONE HORIZONTAL SCAN INTERVAL

ACTIVE DISPLAY TIME

HEBLNK

HESYNC

HCOUNT=0

NEXT LINE SCAN START

VCOUNT =0

VESYNC

VEBLNK

NEXT FRAME SCAN START

VSBLNK

VTOTAL

NEXT SCAN START

# FIG. 8A
# FIG. 8B
# FIG. 8C
# FIG. 8D
# FIG. 8E
# FIG. 8F
# FIG. 8G
# FIG. 8H

# FIG. 8I

SCAN LINE ADDRESS
INFORMATION AND
INFORMATION LINE
ADDRESS INFORMATION

EP 0 416 172 B1

```
                                    ┌─────────────────┐
                                    │  TWO LINE       │
                                    │  SIMULTANEOUS   │
                                    │  DRIVE PARTIAL  │
                                    │  UPDATE         │
                                    └─────────────────┘
                                            │
  ┌─────────────────┐                       ▼
  │ REFRESH FULL    │              ┌───────────────────┐
  │ IMAGE FIELD     │              │ STORE SCAN LINE   │◄────────┐
  └─────────────────┘              │ ADDRESS DATA      │         │
          │                        └───────────────────┘         │
          ▼                                  │                   │
      ◇ IS IMAGE                             ▼                   │
    ◇ INFORMATION ◇         YES     ┌───────────────────┐        │
  ◇ NECESSARY FOR ◇ ──────────────►│ STORE DISPLAY     │        │
    ◇ PARTIAL UPDATE ◇             │ INFORMATION OF    │        │
      ◇ GENERATED? ◇               │ PARTIAL UPDATE    │        │
          │                        │ AT VRAM           │        │
          │ NO                     └───────────────────┘        │
          │                                  │                   │
          │                                  ▼                   │
          │                        ┌───────────────────┐        │
          └───────────────────────►│ INHIBIT ACCESS    │        │
                                    │ TO VRAM           │        │
                                    └───────────────────┘        │
                                             │                   │
                                             └───────────────────┘
```

# FIG. 9A-1

FIG. 9A-2

HAS TOTAL NUMBER OF PARTIAL UPDATE LINES ENDED?

NO

YES

IS LAST SCAN LINE ADDRESS THE SAME AS PRECEDINGLY STORED ADDRESS?

YES

NO

ADMISSION FOR ACCESS TO VRAM

LIST OF SCAN LINE ADDRESS INFORMATION

FIG. 9A-3

FIG. 9A-1

FIG. 9A-2

FIG. 9A-3

FIG. 9A

EP 0 416 172 B1

FIG. 9B

FIG. 9B-1

FIG. 9B-2

FIG. 10

28

MULTI-WINDOW DISPLAY
IMAGE FIELD

Window 2

Parts List 1 (Main Board)

| A | B | C | D |
|---|---|---|---|

Window 1

Window 3

500
400
300

Window 4

電性液晶表示装置の駆動方法は、これまでにない発想を必要とする。
第1図は、強有電性液晶表示装置及び表示情報の供給源であるパーソナルコンピューターなど
の本体装置側に設けられたグラフィックコントローラの構成図である。

abcdefghijklmn=234.87/56.77  test number 3
1234567890-----CNTRL

2

3

4

1

110

5

FIG. 11

EP 0 416 172 B1

29

FIG. 12 A

FIG. 12 B

FIG. 13

EP 0 416 172 B1

| | | (4M-3)FIELD F4M-3, (M=1,2,3···) | (4M-2)FIELD F4M-2, (M=1,2,3···) | (4M-1)FIELD F4M-1, (M=1,2,3···) | 4M FIELD F4M, (M=1,2,3···) |
|---|---|---|---|---|---|
| SCAN SIGNAL | SCAN SELECTION SIGNAL APPLIED TO 4n-3th SCAN ELECTRODES S4n-3 (n=1,2,3,···) | $2V_0$ $O$ $-2V_0$ | NO SCAN (SCAN NON-SELECTION SIGNAL) | $2V_0$ $O$ $-2V_0$ | NO SCAN (SCAN NON-SELECTION SIGNAL) |
| | SCAN SELECTION SIGNAL APPLIED TO 4n-2th SCAN ELECTRODES S4n-2 (n=1,2,3,···) | NO SCAN (SCAN NON-SELECTION SIGNAL) | $2V_0$ $O$ $-2V_0$ | NO SCAN (SCAN NON-SELECTION SIGNAL) | $2V_0$ $O$ $-2V_0$ |
| | SCAN SELECTION SIGNAL APPLIED TO 4n-1th SCAN ELECTRODES S4n-1 (n=1,2,3···) | $2V_0$ $O$ $-2V_0$ | NO SCAN (SCAN NON-SELECTION SIGNAL) | $2V_0$ $O$ $-2V_0$ | NO SCAN (SCAN NON-SELECTION SIGNAL) |
| | SCAN SELECTION SIGNAL APPLIED TO 4nth SCAN ELECTRODES S4n (n=1,2,3,···) | NO SCAN (SCAN NON-SELECTION SIGNAL) | $2V_0$ $O$ $-2V_0$ | NO SCAN (SCAN NON-SELECTION SIGNAL) | $2V_0$ $O$ $-2V_0$ |
| | SCAN NON-SELECTION SIGNAL | $O$ —— | $O$ —— | $O$ —— | $O$ —— |

## FIG. 14A

| INFORMATION SIGNAL | (4M-3)FIELD<br>F4M-3, (M=1,2,3···) | (4M-2)FIELD<br>F4M-2, (M=1,2,3···) | (4M-1)FIELD<br>F4M-1, M=1,2,3···) | 4M FIELD<br>F4M, M=1,2,3···) |
|---|---|---|---|---|
| SYNCHRONIZATION WITH SCAN SELECTION SIGNAL S4n-3 | WHITE SIGNAL ($V_0$, $0$, $-V_0$) / HOLD SIGNAL ($V_0$, $0$, $-V_0$) | | BLACK SIGNAL ($V_0$, $0$, $-V_0$) / HOLD SIGNAL ($V_0$, $0$, $-V_0$) | |
| SYNCHRONIZATION WITH SCAN SELECTION SIGNAL S4n-2 | | WHITE SIGNAL ($V_0$, $0$, $-V_0$) / HOLD SIGNAL ($V_0$, $0$, $-V_0$) | | BLACK SIGNAL ($V_0$, $0$, $-V_0$) / HOLD SIGNAL ($V_0$, $0$, $-V_0$) |
| SYNCHRONIZATION WITH SCAN SELECTION SIGNAL S4n-1 | BLACK SIGNAL ($V_0$, $0$, $-V_0$) / HOLD SIGNAL ($V_0$, $0$, $-V_0$) | | WHITE SIGNAL ($V_0$, $0$, $-V_0$) / HOLD SIGNAL ($V_0$, $0$, $-V_0$) | |
| SYNCHRONIZATION WITH SCAN SELECTION SIGNAL S4n | | BLACK SIGNAL ($V_0$, $0$, $-V_0$) / HOLD SIGNAL ($V_0$, $0$, $-V_0$) | | WHITE SIGNAL ($V_0$, $0$, $-V_0$) / HOLD SIGNAL ($V_0$, $0$, $-V_0$) |

FIG. 14B

FIG. 15A

FIG. 15B

$I_1 - S_1$

$I_2 - S_1$

$I_1 - S_2$

$I_2 - S_2$

(4M-3)TH FIELD — (4M-2)TH FIELD — (4M-1)TH FIELD — 4MTH FIELD

$3V_0$  $V_0$  $-V_0$  $-3V_0$

F I G. I5C

EP 0 416 172 B1

FIG. 15D

FIG. 16

FIG. 17